(19) **Europäisches Patentamt / European Patent Office / Office européen des brevets**

(11) **EP 1 187 366 B1**

(12) **FASCICULE DE BREVET EUROPEEN**

(45) Date de publication et mention
de la délivrance du brevet:
**12.11.2008 Bulletin 2008/46**

(51) Int Cl.:
***H04B 7/08*** *(2006.01)*

(21) Numéro de dépôt: **01402315.4**

(22) Date de dépôt: **06.09.2001**

(54) **Récepteur CDMA adaptif uni-modulaire**

Adaptiver uni-modularer CDMA-Empfänger

Adaptive uni-modular CDMA receiver

(84) Etats contractants désignés:
**AT BE CH CY DE DK ES FI FR GB GR IE IT LI LU MC NL PT SE TR**

(30) Priorité: **07.09.2000 FR 0011683**

(43) Date de publication de la demande:
**13.03.2002 Bulletin 2002/11**

(73) Titulaire: **Mitsubishi Electric Information Technology Centre Europe B.V.**
**1119 NS Schiphol Rijk (NL)**

(72) Inventeur: **Mottier, David,**
**Mitsubishi Electric Ite**
**35700 Rennes (FR)**

(74) Mandataire: **Maillet, Alain**
**Cabinet Le Guen & Maillet**
**5, place Newquay**
**B.P. 70250**
**35802 Dinard Cedex (FR)**

(56) Documents cités:
- TANAKA S ET AL: "EXPERIMENT ON COHERENT ADAPTIVE ANTENNA ARRAY FOR WIDEBAND DS-CDMA MOBILE RADIO" ELECTRONICS LETTERS,IEE STEVENAGE,GB, vol. 34, no. 23, 12 novembre 1998 (1998-11-12), pages 2204-2205, XP000871225 ISSN: 0013-5194
- MATSUOKA H ET AL: "PATH DIVERSITY USING AN ADAPTIVE ARRAY WITH DIRECTIONAL ANTENNAS FOR HIGH BIT RATE MOBILE COMMUNICATION SYSTEMS" SYDNEY, NOV. 8 - 12, 1998,NEW YORK, NY: IEEE,US, 8 novembre 1998 (1998-11-08), pages 171-176, XP000894297 ISBN: 0-7803-4985-7

**Description**

La présente invention concerne de manière générale un procédé et un dispositif de réception opérant en mode d'accès multiple à répartition par codes (CDMA ou Code Division Multiple Access). Plus précisément, lorsque la propagation du signal entre l'émetteur d'un utilisateur et un réseau d'antennes de réception a lieu suivant des trajets multiples, la présente invention permet d'estimer le signal transmis par l'émetteur à partir des signaux d'antennes.

Dans un système de télécommunication, fixe ou mobile, la propagation du signal d'un émetteur vers un récepteur peut se faire par trajets multiples, chaque trajet étant caractérisé par un retard, une direction d'arrivée, une atténuation et une rotation de phase. Si le système de télécommunication permet à une pluralité d'émetteurs d'établir une liaison avec un même récepteur, comme c'est le cas dans les systèmes cellulaires de télécommunication mobile, les signaux des différents terminaux mobiles à destination de la station de base sont transmis par des canaux différents. Chaque canal de transmission comprend une pluralité de trajets jusqu'à la station de base, chaque trajet étant caractérisé par un retard, une direction d'arrivée, une atténuation et une rotation de phase.

Certains systèmes, comme ceux utilisant une technique d'accès multiple à répartition par codes par séquences directes (DS-CDMA) doivent faire face à de fortes interférences. Les différents utilisateurs transmettent au même moment dans la même bande de fréquences et les signaux transmis interfèrent nécessairement les uns avec les autres. La séparation des différents utilisateurs est réalisée en multipliant chaque symbole de l'utilisateur par une séquence d'étalement qui lui est propre, encore appelée pour cette raison signature de l'utilisateur, les différentes signatures étant idéalement choisies orthogonales. La fréquence de séquence d'étalement (chip rate) étant supérieure à la fréquence des symboles, le signal transmis par chaque utilisateur est distribué (ou étalé) dans l'espace des fréquences. A la réception, la séparation du signal d'un utilisateur est réalisée grâce à un filtrage adapté à la signature correspondante. Ce filtrage est également appelé « désétalement » (de-spreading). Le rapport entre la bande occupée par le signal étalé et la bande occupée par le signal d'information est appelé facteur d'étalement.

Les signatures employées doivent présenter des bonnes propriétés de corrélation à savoir un pic d'auto-corrélation très prononcé et de faibles valeurs d'inter-corrélation.

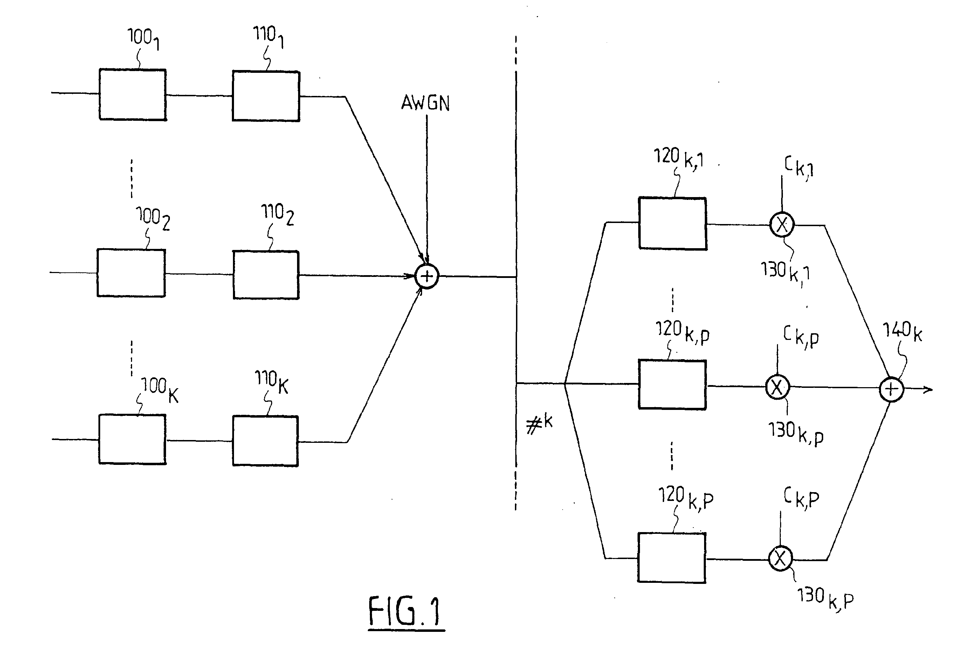

La première de ces deux caractéristiques permet la synchronisation de la séquence reçue. Elle est très utile lorsque le canal de transmission d'un utilisateur comporte plusieurs trajets de propagation. En effet, chaque trajet peut alors être isolé grâce à un filtrage adapté à la signature et au retard du trajet. On peut tirer parti de la diversité de propagation au sein du canal pour augmenter le rapport signal à bruit en réception. Pour ce faire, on utilise un banc de filtres adaptés séparant les différents trajets et on en combine les sorties. La combinaison la plus répandue est le MRC (*Maximum Ratio Combining*), qui consiste à multiplier le signal en sortie de chaque filtre adapté par le conjugué du coefficient multiplicatif complexe introduit par le canal sur le trajet concerné. L'opération de filtrage résultante est un filtrage adapté au filtre équivalent du canal. De par sa structure, le récepteur ainsi constitué est appelé récepteur en râteau ou récepteur Rake. Bien entendu, la séparation parfaite des trajets n'a lieu que si l'auto-corrélation est un Dirac. Dans la pratique cependant, la séparation n'est pas complète et laisse subsister une interférence multi-trajet que l'on appelle encore bruit propre (*Self noise*). La Fig. 1 représente de manière schématique un système DS-CDMA avec $K$ utilisateurs. Les données d'un utilisateur k sont étalées en fréquence par la signature correspondante dans le module $100_k$ avant d'être transmises sur un canal $110_k$ comportant $P$ trajets. A la réception, pour un utilisateur k donné, les signaux s'étant propagés selon les différents trajets i=1..P du canal sont séparés par des filtres adaptés $120_{k,1}...120_{k,P}$ (seule la batterie de filtres de l'utilisateur k a été représentée) avant d'être pondérés par un jeu de coefficients complexes $C_{k,i}$. Les signaux ainsi pondérés sont sommés ($140_k$) et la somme résultante en sortie du récepteur Rake est ultérieurement détectée pour fournir une estimation des données de l'utilisateur k. Dans le cas d'une liaison descendante (liaisons d'une station de base vers un terminal mobile) les canaux 1 à $K$ sont identiques alors qu'ils diffèrent dans la liaison montante (liaisons de terminaux mobiles vers la station de base). Le premier cas peut, de ce point de vue, être considéré comme un cas particulier du second.

La seconde caractéristique énoncée plus haut garantit un faible niveau d'interférence entre deux utilisateurs distincts. Néanmoins, là aussi, en pratique, l'inter-corrélation entre deux signatures est rarement nulle Cela est notamment le cas en situation dite d'éblouissement (*Near-far effect*) où un signal de forte puissance reçu d'un utilisateur perturbe la réception d'un signal de faible puissance provenant d'un autre utilisateur. D'autre part, lorsque le nombre d'utilisateurs est élevé, proche du facteur d'étalement, la somme des interférences des différents utilisateurs, faibles si on les prend isolément, peut avoir des effets très perturbateurs pour la détection.

Des techniques plus élaborées d'élimination de l'interférence sont alors souvent nécessaires pour pallier les défauts d'orthogonalité des séquences. Pour combattre l'interférence entre les canaux des différents utilisateurs (interférence dite multi-utilisateur), plusieurs méthodes ont été proposées. On en trouvera une revue dans l'article de Simon Moshavi intitulé « Multi-user detection for DS-CDMA communications » paru dans IEEE Communications Magazine, Oct. 96, pages 124-136. Parmi les techniques multi-utilisateur existantes, les techniques d'élimination soustractive (Substractive Interference Cancellation) présentent de bonnes performances pour une complexité de mise en oeuvre raisonnable. Ces techniques s'appliquent bien à la situation simple où le canal de transmission d'un utilisateur comporte un seul trajet. Dans ce cas, le filtre modélisant le canal peut se limiter à la multiplication par un coefficient complexe. Lorsque les canaux sont multi-trajet, la situation est en revanche beaucoup plus compliquée car il faut procéder à la fois à l'élimination de l'interférence multi-trajet et de l'interférence multi-utilisateur. Un détecteur itératif à élimination soustractive de l'interférence multi-utilisateur en présence de trajets multiples a été proposé dans un article de M.C. Reed et al. intitulé « Iterative Multiuser detection using antenna arrays and FEC on multipath channels » publié dans IEEE Journal on Selected Areas in Communications, Vol. 17, N°12, Dec.'99, pages 2082-2089. Chaque itération de la détection comprend un filtrage adapté à chaque trajet de propagation du canal de transmission de l'utilisateur, une formation de voies et une combinaison de type Rake. Ces trois étapes peuvent être considérées comme définissant le traitement d'un récepteur Rake modifié en ce qu'il inclut une formation de voies suivant les directions d'arrivée des différents trajets.

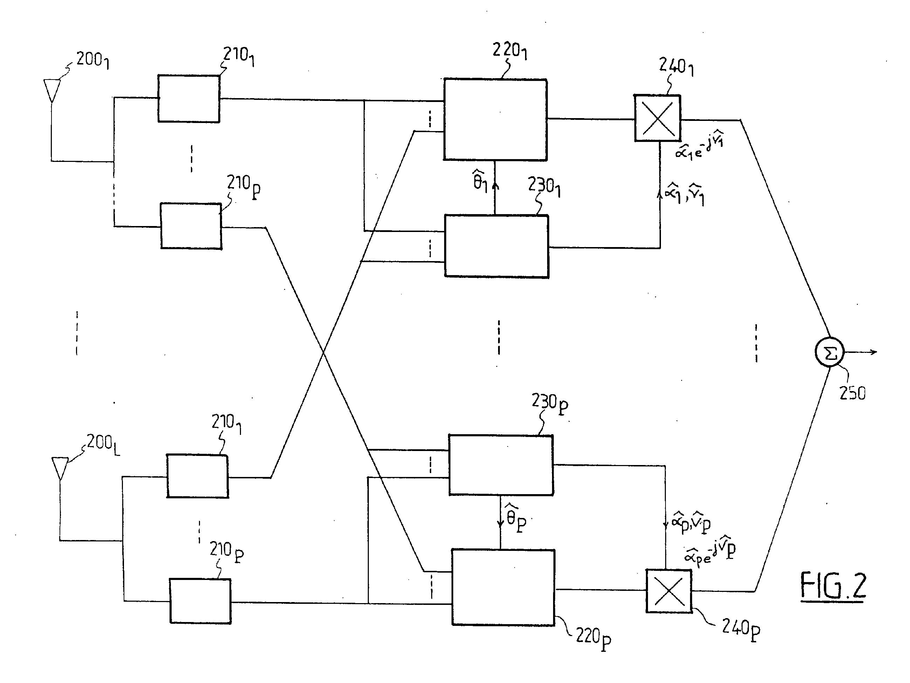

Un tel dispositif de réception est illustré en Fig. 2. Le dispositif comprend un réseau d'antennes $(200_1)...(200_L)$. Chaque antenne $(200\ell)$ est reliée à une batterie de filtres adaptés $(210_{i,k})$, $i$=1..$P$, chaque filtre $(210_i)$ étant adapté à un trajet $i$ de l'utilisateur $k$. Les signaux de sortie relatifs à un même trajet $i$=1..$P$ sont dirigés vers des formateurs de voies $(220_{1,k}...,220_{P,k})$. Chaque formateur de voie $(220_{i,k})$ reçoit d'un estimateur $(230_{i,k})$ de directions d'arrivée la valeur estimée $\hat{\theta}_{i,k}$ de l'angle d'arrivée $\theta_{i,k}$ du trajet $i$ du canal de transmission $k$, ce qui lui permet de pointer son faisceau de réception dans la direction d'arrivée correspondante. Dans le cas d'un réseau d'antennes linéaire uniforme, la formation de voie $(220_{i,k})$ consiste à effectuer le calcul :

$$y_{i,k}=\sum_{\ell=1}^{L} x_{\ell,i,k}.\exp(-j\hat{\varphi}_{\ell,i,k}) \quad \text{où} \quad \hat{\varphi}_{\ell,i,k}=2\pi d/\lambda.\cos\hat{\theta}_{i,k}.(\ell-1) \tag{1}$$

et où $x_{\ell,i,k}$ et $y_{i,k}$ sont respectivement les entrées et la sortie du formateur de voie $(220_{i,k})$.

$\hat{\theta}_{i,k}$ est l'angle d'arrivée défini par rapport à l'axe du réseau d'antenne linéaire, $d$ est la distance entre deux antennes du réseau et $\lambda$ la longueur de l'onde transmise.

Les sorties des $P$ formateurs de voies sont multipliées en $(240_{i,k})$ par des coefficients complexes $\square_{i,k}$ avant d'être sommées par un sommateur $(250)$ pour fournir une sortie de type MRC (Maximum Ratio Combining). Les coefficients complexes $\square_{i,k}$ sont les conjugués d'estimations des coefficients multiplicatifs complexes des différents trajets $_i$ de l'utilisateur $k$, c'est-à-dire $\hat{c}_{i,k}=\hat{\alpha}_{i,k}.\exp(-j\hat{v}_{i,k})$ où $_k\hat{\alpha}_i$, et $\hat{v}_{i,k}$ sont respectivement le coefficient d'atténuation estimé et la rotation de phase estimée du trajet $i$ de l'utilisateur $k$. Le résultat de la combinaison est donc :

$$z_k=\sum_{i=1}^{P} y_{i,k}.\hat{\alpha}_{i,k}.\exp(-j\hat{v}_{i,k}) \tag{2}$$

Ce dispositif de réception permet de réaliser à la fois une formation de voies dans les directions des différents trajets et une combinaison de type MRC comme dans un filtre de Rake.

La méthode proposée présuppose cependant que l'on détermine les coefficients d'atténuation, les rotations de phase ainsi que les directions d'arrivée de tous les trajets de tous les utilisateurs.

La publication de Tanaka S intitulée "Experiment on coherent adaptative antenna array for wideband DS-CDMA mobile radio" divulgue un procédé de réception d'un signal émis par un émetteur et arrivant sur un réseau d'antennes après s'être propagé selon une pluralité de trajets, dans lequel on décompose chaque signal d'antenne en des signaux séparés issus des différents trajets, et on combine les signaux séparés à l'aide d'un combinateur Rake cohérent.

Le but de l'invention est de proposer un récepteur de Rake incluant une formation de voies mais ne nécessitant pas le calcul explicite des coefficients d'atténuation, rotations de phase et directions d'arrivée des différents trajets.

Ce but est atteint par l'objet de l'invention, défini par un procédé de réception d'un signal émis par un émetteur et arrivant sur un réseau d'antennes après s'être propagé selon une pluralité de trajets, comprenant une étape de filtrage décomposant chaque signal d'antenne en des signaux séparés issus des différents trajets, une étape de combinaison combinant linéairement lesdits signaux séparés au moyen d'un jeu de coefficients complexes pour fournir un signal combiné, le procédé formant un signal d'erreur entre une valeur de consigne du signal transmis et ledit signal combiné, ledit jeu de coefficients complexes étant adapté de manière à minimiser la moyenne quadratique du signal d'erreur.

Selon un premier mode de réalisation, le signal émis comprenant des données modulées sous forme de symboles, la valeur de consigne est un symbole pilote.

Selon un second mode de réalisation , le signal émis comprenant des données modulées sous forme de symboles, le procédé comporte en outre une étape d'estimation du symbole transmis à partir du signal combiné, ladite valeur de consigne étant alors une valeur estimée du symbole transmis.

Selon un troisième mode de réalisation, le signal émis comprenant des données modulées sous forme de symboles, le procédé comporte en outre une étape d'estimation du symbole transmis à partir du signal combiné, une étape comprenant une démodulation du symbole estimé en des données estimées, un désentrelacement et un décodage canal desdites données, une étape comprenant un recodage canal des données décodées suivi d'un entrelacement et une modulation desdites données pour fournir une valeur réestimée du symbole transmis, la valeur de consigne étant alors choisie égale à ladite valeur réestimée.

Avantageusement, le jeu de coefficients complexes est adapté selon un algorithme de type LMS ou RLS.

L'objet de l'invention est également défini par un dispositif de réception d'un signal émis par un émetteur, le dispositif comprenant un réseau d'antennes et comprenant des moyens adaptés à la mise en oeuvre des étapes du procédé exposé ci-dessus.

Les caractéristiques de l'invention mentionnées ci-dessus, ainsi que d'autres, apparaîtront plus clairement à la lecture de la description faite en relation avec les figures jointes, parmi lesquelles :

La Fig. 1 représente de manière schématique un système de télécommunication DS-CDMA ;
La Fig. 2 représente de manière schématique un récepteur Rake incluant une formation de voies ;
La Fig. 3 représente de manière schématique un récepteur selon un mode de réalisation de l'invention.

L'idée de base de l'invention est de s'affranchir d'une estimation des directions d'arrivée, coefficients d'atténuation et rotations de phase des différents trajets en considérant la formation de voie et la combinaison de trajets comme une seule opération de combinaison linéaire par des coefficients complexes, en initialisant ces coefficients à des valeurs prédéterminées et en les adaptant ensuite de manière à minimiser l'erreur quadratique moyenne entre un signal de consigne et un signal observé en sortie de l'étape de combinaison.

Nous nous plaçons dans la situation où un utilisateur $k$ transmet des symboles $s_k(t)$ sur un canal de transmission $k$ constitué d'une pluralité de trajets de propagation $i=1..P$. Chaque trajet $i$ du canal $k$ arrive sur un réseau d'antennes sous un angle d'incidence $\theta_{i,k}(t)$. Le réseau d'antennes est, de préférence, un réseau linéaire constitué de $L$ antennes régulièrement espacées d'une distance $d$ mais d'autres types de réseaux, notamment des réseaux circulaires, peuvent également être envisagés.

Soit $x\ell,i,k$ le signal reçu par l'antenne $\ell$, $\ell = (1,...,L)$ correspondant au trajet d'indice $i$ de l'utilisateur d'indice $k$ :

$$x_{\ell,i,k}(t)=\left[\alpha_{i,k}(t).\exp(j\nu_{i,k})\right].\left[\exp(j2\pi d/\lambda\cos\theta_{i,k}(t).(\ell-1))\right].s_k(t)+n_{\ell,i,k}(t) \qquad (3)$$

Le premier terme entre crochets représente l'atténuation et la rotation de phase subies par le signal sur le trajet $i$ du canal $k$, le second terme entre crochets représente le déphasage dû à la différence de marche entre l'antenne $\ell$ et l'antenne 1 de référence et $n\ell,i,k(t)$ représente le bruit blanc additif gaussien au niveau de l'antenne $\ell$, incluant le bruit thermique, l'interférence multi-trajet et l'interférence multi-utilisateur. Le signal émis $S_k(t)$ subit donc une double rotation de phase résultant de l'effet du canal ($\nu_{i,k}(t)$) d'une part et des différences de marche entre les antennes du réseau d'autre part ($\varphi_{\ell,i,k}(t)=2\pi d/\lambda\cos\theta_{i,k}(t).(\ell-1)$).

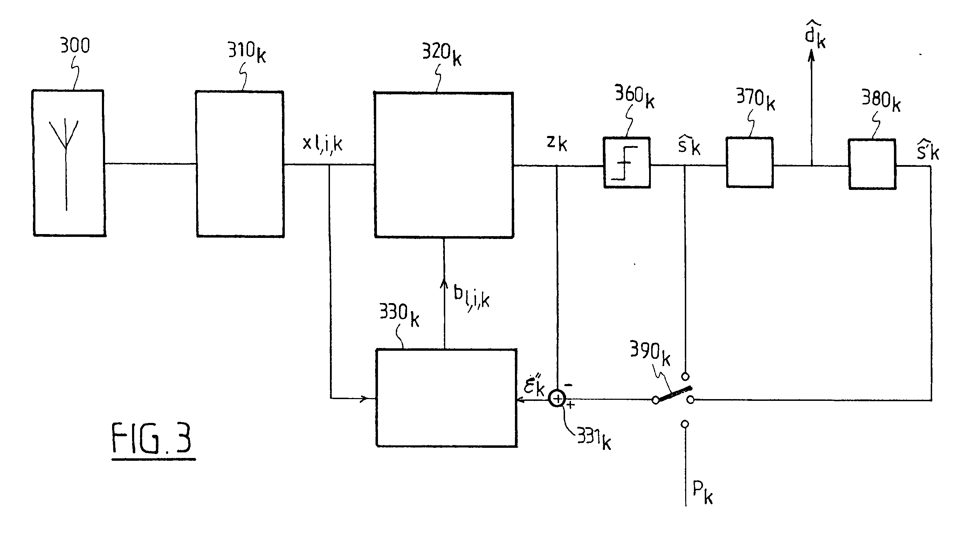

La Fig. 3 illustre un récepteur, effectuant la formation de voies et la recombinaison en une seule étape de combinaison par des coefficients complexes, tel que proposé par l'invention.

Le récepteur représenté est dédié à la réception des symboles transmis sur un canal $k$. Le système comporte $L$ antennes représentées schématiquement par le bloc ($300_k$). Chacun des $L$ signaux d'antennes est ensuite corrélé par une batterie de $P$ filtres adaptés où $P$ est le nombre de trajets de propagation du canal, chaque filtre étant adapté à un trajet $i$. L'ensemble des $L.P$ filtres adaptés est schématisé par le bloc ($310_k$), les $L.P$ signaux de sortie, $x\ell,i,k$, $\ell=1..L$, $i=1..P$ des filtres adaptés étant transmis vers un module combinant linéairement ces signaux de sortie par des coefficients complexes $b\ell,i,k$ représenté par le bloc ($320_k$) pour fournir un signal de combinaison $z_k$. Le signal de combinaison est soumis à un bloc de décision ($360_k$) fournissant sous forme souple ou dure le symbole $\hat{s}_k$ transmis par l'utilisateur k. Par décision souple, il faut entendre ici le résultat d'une pondération de symboles par leurs probabilités à posteriori respectives. Le symbole estimé $\hat{s}_k$ est alors démodulé pour fournir une ou des données estimées $\hat{d}_k$. Ces données peuvent ensuite être soumises à une opération de désentrelacement et de décodage canal ($370_k$) à valeurs souples ou dures (si toutefois, bien entendu, les données ont été entrelacées et codées par un codage canal correspondant au niveau de l'utilisateur).

Le module de combinaison ($320_k$) effectue les opérations suivantes :

$$z_k=\sum_{i=1}^{P}\sum_{\ell=1}^{L}x_{\ell,i,k.}.b_{\ell,i,k} \qquad (4)$$

où les $b_{\ell,i,k}(t)=a_{\ell,i,k}.\exp(-j\psi_{\ell,i,k})$ avec $\ell=1,...,L$, $i=1..P$, sont des coefficients de pondération complexes. L'équation (4) s'écrit de manière équivalente :

$$z_k(t) = \overline{\mathbf{b}}_k(t)_T \cdot \overline{\mathbf{x}}_k(t) = \left(b_{1,1,k}(t)\,b_{2,1,k}(t)\cdot b_{L,1,k}(t)\,..\,b_{1,P,k}(t)\,b_{2,P,k}(t)\cdot b_{L,P,k}(t)\right) \begin{pmatrix} x_{1,1,k}(t) \\ x_{2,1,k}(t) \\ \vdots \\ x_{L,1,k}(t) \\ \\ x_{1,P,k}(t) \\ \\ \\ x_{L,P,k}(t) \end{pmatrix} \qquad (4')$$

L'invention se propose d'adapter les coefficients $b_{\ell,i,k}$ de manière à minimiser une erreur quadratique moyenne en sortie du module de combinaison complexe $(320_k)$.

Le signal d'erreur s'écrit : $\quad \varepsilon_k(t) = q_k(t) - z_k(t) \qquad\qquad\qquad (5)$

où $q_k(t)$ est une valeur de consigne correspondant au signal observé $z_k(t)$.

Pour adapter les coefficients $b_{\ell,i,k}$ on peut utiliser comme valeur de consigne, tel qu'indiqué symboliquement par le commutateur $(390_k)$, soit directement des symboles pilotes $p_k(t)$, soit les symboles estimés $\hat{s}_k(t)$ en sortie du module de décision $(360_k)$, soit encore les symboles $\hat{s}'_k(t)$ obtenus après décodage et recodage canal. Dans ce dernier cas, les symboles estimés $\hat{s}_k(t)$ sont d'abord démodulés et les données $d_k$ obtenues sont désentrelacées, décodées par décodage canal $(370_k)$ puis les données ainsi obtenues sont recodées par codage canal, réentrelacées et remodulées $(380_k)$ pour fournir des nouveaux symboles estimés, $\hat{s}'_k(t)$, présentant une meilleure fiabilité que les symboles intialement estimés, $\hat{s}_k(t)$. Avantageusement, les décisions sur les symboles prises en $(360_k)$ et celles sur les données prises en $(370_k)$ sont à valeurs souples, les symboles $\hat{s}'_k(t)$ étant alors obtenus par pondération de symboles de la constellation par leurs probabilités a posteriori respectives. Il est à noter que le recodage n'est pas nécessaire si l'on récupère directement les données encodées en sortie du décodage. Par exemple, si l'on utilise pour le décodage un algorithme de type SOVA (Soft Output Viterbi Algorithm), les données sous forme codée peuvent être récupérées directement le long du chemin de maximum de vraisemblance.

L'adaptation des coefficients $b_{\ell,i,k}$ peut se faire avec les symboles pilotes uniquement soit se poursuivre avec les symboles estimés, avant ou après décodage canal, soit encore être réalisée uniquement grâce à ces derniers en cas d'absence complète de symboles pilotes.

Les coefficients $b_{\ell,i,k}$ sont initialisés au début du processus d'adaptation aux valeurs suivantes $b_{\ell,i,k}(0) = b \cdot \delta$ $(\ell - \ell_0)$ pour chaque trajet $i$ où $\delta$ est le symbole de Dirac, $\ell_0$ est un numéro d'antenne et $b$ un coefficient complexe (par exemple 1). La configuration de départ est ainsi une configuration omni-directionelle multi-trajet.

Alternativement, les coefficients $b_{\ell,i,k}$ peuvent être initialisés grâce un estimateur extérieur à l'invention fournissant des valeurs estimées $\hat{\theta}_{i,k}(0), \hat{v}_{i,k}(0), \hat{\alpha}_{i,k}(0)$ des angles d'arrivée, des rotations de phase et des atténuations des différents trajets du canal au temps 0. Plus précisément :

$$b_{\ell,i,k}(0) = \hat{\alpha}_{i,k}(0).\exp(-j(\hat{v}_{i,k}(0) + 2\pi d/\lambda.\cos\hat{\theta}_{i,k}(0).(\ell-1)))\,.$$

Au cours de l'adaptation, les coefficients sont modifiés de manière à minimiser la valeur moyenne $E(|\varepsilon_k|^2)$. Du fait de la rétroaction du signal d'erreur $\varepsilon_k$, les valeurs $\psi_{\ell,i,k}$ convergent progressivement vers les valeurs $v_{i,k} + \varphi_{\ell,i,k}$ et compensent par conséquent les déphasages dues au canal et aux différences de marche entre antennes. Il en résulte que le module $(320_k)$ effectue à la fois une formation de voies et une compensation des rotations de phase induites par les différents trajets.

L'algorithme d'adaptation des coefficients est fondé sur une minimisation de l'erreur quadratique moyenne. De nombreux algorithmes ont été proposés à cette fin dans la littérature et l'on pourra en trouver une description des principaux dans l'article de revue de L.C. Godara intitulé « Application of antenna arrays to mobile communications, Part II : Beam-forming and direction-of-arrival considerations publié dans Proceedings of the IEEE, Vol. 85, N° 8, August '97, pages 1195-1245.

Par exemple, on pourra utiliser un algorithme fondé sur la méthode du gradient stochastique.

Plus précisément, si l'on note :

$$J_k(b_{\ell,i,k})=E(\varepsilon_k^2)=E\left(\left(q_k-\sum_{\ell}b_{\ell,i,k}.x_{\ell,i,k}\right)^2\right) \qquad (6)$$

les coefficients sont adaptés de la manière suivante :

$$\overline{\mathbf{b}}_k(t+1)=\overline{\mathbf{b}}_k(t)-\mu_k.\nabla J_k(t) \qquad (7)$$

où $\mu_k$ est un coefficient réel positif définissant le pas d'adaptation des coefficients.

Si l'on utilise l'algorithme dit LMS (Least Mean Square) sous sa forme complexe, le gradient $\Delta J_k$ est estimé au temps t par $-\varepsilon_k(t).\overline{\mathbf{x}}_k^*(t)$ d'où en tenant compte de (7):

$$\overline{\mathbf{b}}_k(t+1)=\overline{\mathbf{b}}_k(t)+\mu_k.\varepsilon_k(t).\overline{\mathbf{x}}_k^*(t) \qquad (8)$$

où le symbole désigne l'opérateur de conjugaison.

Pour assurer la convergence de l'adaptation, le coefficient $\mu_k$ est choisi inférieur à $1/Tr(\mathbf{R}_k)$ où $\mathbf{R}_k$ est la matrice de corrélation des $x_{\ell,i,k}(t)$ et $Tr(.)$ est la fonction trace.

Avantageusement, on pourra choisir un coefficient $\mu_k$ de faible valeur après que l'algorithme a commencé à converger, ceci de manière à affiner la précision de la convergence. Réciproquement, on pourra choisir un coefficient $\mu_{,k}$ de plus grande valeur après que l'algorithme a commencé à converger, ceci de manière à accroître les capacités de poursuite de l'algorithme. On pourra également utiliser un algorithme LMS normalisé, dans lequel le pas d'adaptation $(\mu_k)$ est divisé par la norme du vecteur d'entrée $(\overline{X}_k(t))$ dans l'équation (8).

Alternativement à l'algorithme LMS, l'adaptation des coefficients $b_{\ell,i,k}$ pourra être assurée au moyen de l'algorithme RLS (Recursive Least Square) tel que décrit, par exemple, dans l'article cité supra ou encore au moyen d'un algorithme dérivé de ce dernier, préférablement l'algorithme Fast-RLS tel que décrit dans l'article de D. Falconer et al. intitulé « Application of Fast Kalman estimation of adaptive equalization » publié dans IEEE Transactions on Communications, Vol. COM-5, Oct. '78, pages 1439-1446.

L'algorithme RLS est fondé sur une inversion par récurrence de la matrice de corrélation ($\mathbf{R}_k$). L'adaptation des coefficients complexes $b_{\ell,i,k}$ se fait alors de la manière suivante :

$$\overline{\mathbf{b}}_k(t+1)=\overline{\mathbf{b}}_k(t)+\varepsilon_k(t).\overline{\mathbf{k}}_k^*(t) \qquad (10) \qquad \text{où} \qquad \overline{\mathbf{k}}_k(t)=\overline{\mathbf{x}}_k(t)^T.\mathbf{P}_k(t) \qquad (11)$$

où $\overline{K}_k$ est un vecteur de mise à jour appelé gain de Kalman et $\mathbf{P}_k(t)=\mathbf{R}_k^{-1}(t)$ est l'inverse de la matrice de corrélation calculée par les formules de récurrence :

$$\mathbf{P}_k(t)=\mathbf{P}_k(t-1)-\mathbf{P}_k(t-1)\mathbf{x}_k(t)\mathbf{k}_k(t) \qquad (12)$$

avec $\mathbf{P}_k(0)=\mathbf{I}_{LP}$ où $\mathbf{I}_{LP}$ est la matrice unité. et le gain de Kalman $\overline{K}_k(t)$ est calculé par :

$$\overline{\mathbf{k}}_k(t)=\frac{\mathbf{r}_k(t)^T}{1+\mathbf{r}_k(t)^T\overline{\mathbf{x}}_k(t)} \qquad (13)$$

où $\mathbf{r}_k(t)$ est la forme linéaire définie par

$$\mathbf{r}_k(t) = \mathbf{P}_k(t-1)\,\overline{\mathbf{x}}_k(t) \qquad (14)$$

Avantageusement, on intègrera un facteur d'oubli dans les équations (12) et (14) de sorte que seules les contributions des vecteurs d'entrée les plus récents seront prises en compte dans l'estimation de la matrice de corrélation.

Selon un exemple de réalisation de l'invention, l'adaptation sera réalisée grâce à l'algorithme Fast-RLS.

Bien que l'invention ait été exposée dans le contexte de la DS-CDMA, elle peut s'appliquer à d'autres modes d'accès à condition que les canaux des différents utilisateurs et les différents trajets empruntés pour un canal donné puissent être séparés à la réception. Dans le cas où les signaux reçus sont en bande large, il importe de prévoir un alignement temporel des signaux ayant subi des temps de propagation différents avant la combinaison complexe. Si la séparation des différents utilisateurs et trajets est réalisée par des batteries de filtres au niveau des antennes, les sorties des filtres relatifs à un même trajet doivent être retardées de manière à être alignées temporellement. L'alignement temporel peut être réalisé par des buffers FIFO à pointeurs de sortie mobiles et réglé finement par interpolation.

En outre, bien que le récepteur de la Fig. 3 ait été représenté sous forme de modules, il est cependant clair pour l'homme du métier que les opérations représentées par les différents modules de la Fig. 3 peuvent être effectuées par un processeur unique programmé à cet effet ou par une pluralité de processeurs dédiés.

**Revendications**

1. Procédé de réception d'un signal émis par un émetteur ($k$) et arrivant sur un réseau d'antennes (300) après s'être propagé selon une pluralité de trajets ($i$), comprenant une étape de filtrage ($310_k$) décomposant chaque signal d'antenne en des signaux séparés ($x\ell,i,k$) issus des différents trajets, une étape ($320_k$) de combinaison combinant linéairement lesdits signaux séparés au moyen d'un jeu de coefficients complexes pour fournir un signal combiné ($z_k$), le procédé étant **caractérisé en ce qu'**un signal d'erreur ($\varepsilon_k$) est formé ($331_k$) entre une valeur de consigne ($q_k$) du signal transmis et ledit signal combiné et que le jeu de coefficients complexes est adapté ($330_k$) de manière à minimiser la moyenne quadratique du signal d'erreur.

2. Procédé de réception selon la revendication 1, **caractérisé en ce que**, le signal émis comprenant des données modulées sous forme de symboles, la valeur de consigne est un symbole pilote ($p_k$).

3. Procédé de réception selon la revendication 1, **caractérisé en ce que**, le signal émis comprenant des données modulées sous forme de symboles, le procédé comporte en outre une étape ($360_k$) d'estimation du symbole transmis à partir du signal combiné ($z_k$), ladite valeur de consigne étant alors une valeur estimée ($\hat{s}_k$) du symbole transmis.

4. Procédé de réception selon la revendication 1, **caractérisé en ce que**, le signal émis comprenant des données modulées sous forme de symboles, le procédé comporte en outre une étape ($360_k$) d'estimation du symbole transmis à partir du signal combiné ($z_k$), une étape ($370_k$) comprenant une démodulation du symbole estimé en des données estimées, un désentrelacement et un décodage canal desdites données ($\hat{d}_k$), une étape ($380_k$) comprenant un recodage canal des données décodées suivi d'un entrelacement et une modulation desdites données pour fournir une valeur réestimée ($\hat{s}'_k$) du symbole transmis, la valeur de consigne étant alors choisie égale à ladite valeur réestimée.

5. Procédé de réception selon l'une des revendications précédentes, **caractérisé en ce que** le jeu de coefficients complexes est adapté selon un algorithme de type LMS.

6. Procédé de réception selon l'une des revendications 1 à 4, **caractérisé en ce que** le jeu de coefficients complexes est adapté selon un algorithme de type RLS.

7. Procédé de réception selon la revendication 5 ou 6, **caractérisé en ce que** le jeu de coefficients est initialisé avec les valeurs $b_{\ell,i,k}(0) = b \cdot \delta(\ell - \ell_0)$, $\forall i$ où $\delta$ est le symbole de Dirac, $\ell_0$ est un numéro d'antenne et $b$ un coefficient complexe.

8. Procédé de réception selon la revendication 5 ou 6, **caractérisé en ce que** le jeu de coefficients est initialisé au moyen d'une estimation préalable des directions d'arrivée des différents trajets ainsi que des coefficients d'atténuation et des rotations de phase affectant le signal le long lesdits trajets.

9. Dispositif de réception d'un signal émis par un émetteur ($k$) et arrivant sur un réseau d'antennes (300) après s'être propagé selon une pluralité de trajets ($i$), le dispositif de réception comprenant des moyens de filtrage ($310_k$) décomposant chaque signal d'antenne en des signaux séparés ($x_{\ell,i,k}$) issus des différents trajets, des moyens ($320_k$) de combinaison combinant linéairement lesdits signaux séparés au moyen d'un jeu de coefficients complexes pour fournir un signal combiné ($z_k$), le dispositif de réception étant **caractérisé en ce qu'**il comporte des moyens de formation ($331_k$) d'un signal d'erreur ($\varepsilon k$) entre une valeur de consigne ($q_k$) du signal transmis et ledit signal combiné et que le jeu de coefficients complexes est adapté ($330_k$) de manière à minimiser la moyenne quadratique du signal d'erreur.

## Claims

1. Method of receiving a signal emitted by a transmitter ($k$) and arriving at an array of antennae (300) after being propagated along a plurality of paths ($i$), the said method comprising a filtering stage ($310_k$) that decomposes each antenna signal into separate signals ($x_{i,j,k}$) stemming from different paths and a combination stage ($320_k$) that combines the said separate signals in a linear manner by means of a set of complex coefficients in order to supply a combined signal ($Z_k$), the method being **characterised in that** an error signal ($\varepsilon_k$) is formed ($331_k$) between a reference value ($q_k$) of the transmitted signal and the said combined signal and **in that** the set of complex coefficients is adapted ($330_k$) so as to minimise the root mean square of the error signal.

2. Method of receiving according to claim 1, **characterised in that** as the signal transmitted comprises modulated data in the form of symbols, the reference value is a pilot symbol ($p_k$).

3. Method of receiving according to claim 1, **characterised in that** as the signal transmitted comprises modulated data in the form of symbols, the method also includes a stage ($360_k$) of estimating the transmitted symbol from the combined signal ($z_k$), the said reference value therefore being an estimated value ($\hat{s}k$) of the transmitted symbol.

4. Method of reception according to claim 1, **characterised in that** as the signal transmitted comprises modulated data in the form of symbols, the method also includes a stage ($360_k$) of estimating the transmitted symbol from the combined signal ($z_k$), a stage ($370_k$) comprising demodulation of the estimated symbol into estimated data de-interlacing and channel decoding of the said data (d'k), a stage ($380_k$) comprising channel recoding of the decoded data followed by interlacing and modulation of the said data in order to supply a re-estimated value ($\hat{s}k$) of the transmitted symbol, the reference value therefore being selected equal to the said re-estimated value.

5. Method of receiving according to one of the preceding claims, **characterised in that** the set of complex coefficients is adapted according to an LMS-type algorithm.

6. Method of receiving according to one of the preceding claims, **characterised in that** the set of complex coefficients is adapted according to an RLS-type algorithm.

7. Method of receiving according to claim 5 or 6, **characterised in that** the set of coefficients is initialised with the values $b_{i,j,k}(0) = b.\delta(l-l0)$, $\lambda i$ where $\delta$ is the Dirac symbol, lo is a number of antennae and b is a complex coefficient.

8. Method of reception according to claim 5 or 6, **characterised in that** the set of coefficients is initialised by means of a prior estimation of the arrival directions of the different paths as well as of the coefficients of attenuation and of the phase rotations affecting the signal along the said paths.

9. Device for receiving a signal emitted by a transmitter ($k$) and arriving at an array of antennae (300) after being propagated along a plurality of paths ($i$), the receiving device comprising filtering means ($310_k$) that decompose each antenna signal into separate signals ($x_{i,j,k}$) stemming from different paths, combining means ($320_k$) that combine the said separated signals in a linear manner by means of a set of complex coefficients in order to supply a combined signal ($zk$), the receiving device being **characterised in that** the said device comprises means ($331_k$) for forming an error signal ($\varepsilon k$) between a reference value ($qk$) of the signal transmitted and the said combined signal and **in that** the set of complex coefficients is adapted ($330_k$) so as to minimise the root mean square of the error signal.

**Patentansprüche**

1. Verfahren zum Empfang eines durch einen Sender (k) gesendeten und auf einem Antennennetz (300) eintreffenden Signals, nachdem es sich auf mehreren Wegen (*i*) ausgebreitet hat, das einen Filterungsschritt ($310_k$), der jedes Antennensignal in getrennte, aus den unterschiedlichen Wegen hervorgehende Signale ($x_{\ell,i,k}$) zerlegt, und einen Verknüpfungsschritt ($320_k$), der die getrennten Signale mittels eines Satzes von komplexen Koeffizienten linear verknüpft, um ein verknüpftes Signal ($z_k$) zu liefern, umfasst, wobei das Verfahren **dadurch gekennzeichnet ist, dass** ein Fehlersignal ($\varepsilon_k$) zwischen einem Sollwert ($q_k$) des übertragenen Signals und dem verknüpften Signal gebildet ($331_k$) wird und dass der Satz von komplexen Koeffizienten derart angepasst ($330_k$) wird, dass der quadratische Mittelwert des Fehlersignals minimiert wird.

2. Empfangsverfahren nach Anspruch 1, **dadurch gekennzeichnet, dass** das gesendete Signal in Form von Symbolen modulierte Daten umfasst, wobei der Sollwert ein Pilotsymbol ($p_k$) ist.

3. Empfangsverfahren nach Anspruch 1, **dadurch gekennzeichnet, dass** das gesendete Signal in Form von Symbolen modulierte Daten umfasst, wobei das Verfahren ferner einen Schritt ($360_k$) zur Schätzung des ausgehend vom verknüpften Signal ($z_k$) übertragenen Symbols umfasst, wobei der Sollwert dann ein geschätzter Wert ($\hat{s}k$) des übertragenen Symbols ist.

4. Empfangsverfahren nach Anspruch 1, **dadurch gekennzeichnet, dass** das gesendete Signal in Form von Symbolen modulierte Daten umfasst, wobei das Verfahren ferner einen Schritt ($360_k$) zur Schätzung des ausgehend vom verknüpften Signal ($z_k$) übertragenen Symbols, einen Schritt ($370_k$), der eine Demodulation des geschätzten Symbols in geschätzte Daten, eine Entschachtelung und eine Kanaldecodierung der Daten ($\hat{d}_k$) umfasst, und einen Schritt ($380_k$) umfasst, der eine Kanalneucodierung der decodierten Daten umfasst, der eine Verschachtelung und eine Modulation der Daten folgt, um einen neu geschätzten Wert ($\hat{s}_k$) des übertragenen Symbols zu liefern, wobei der Sollwert dann gleich dem neu geschätzten Wert gewählt wird.

5. Empfangsverfahren nach einem der vorhergehenden Ansprüche, **dadurch gekennzeichnet, dass** der Satz von komplexen Koeffizienten gemäß einem Algorithmus des Typs LMS angepasst wird.

6. Empfangsverfahren nach einem der Ansprüche 1 bis 4, **dadurch gekennzeichnet, dass** der Satz von komplexen Koeffizienten gemäß einem Algorithmus des Typs RLS angepasst wird.

7. Empfangsverfahren nach Anspruch 5 oder 6, **dadurch gekennzeichnet, dass** der Satz von Koeffizienten mit den Werten $b_{\ell,i,k}(0)=b. \delta (\ell-\ell_0)$, $\forall i$ initialisiert wird, wo $\delta$ das Dirac-Symbol ist, $\ell_0$ eine Antennennummer und b ein komplexer Koeffizient ist.

8. Empfangsverfahren nach Anspruch 5 oder 6, **dadurch gekennzeichnet, dass** der Satz von Koeffizienten mittels einer vorherigen Schätzung der Empfangsrichtungen der unterschiedlichen Wege sowie Dämpfungskoeffizienten und Phasendrehungen, die das Signal entlang der Wege beeinträchtigen, initialisiert wird.

9. Vorrichtung zum Empfang eines durch einen Sender (*k*) gesendeten und auf einem Antennennetz (300) eintreffenden Signals, nachdem es sich auf mehreren Wegen (*i*) ausgebreitet hat, wobei die Empfangsvorrichtung Filterungsmittel ($310_k$), die jedes Antennensignal in getrennte, aus den unterschiedlichen Wegen hervorgehende Signale ($x_{l,i,k}$) zerlegen, und Verknüpfungsmittel ($320_k$), die die getrennten Signale mittels eines Satzes von komplexen Koeffizienten linear verknüpfen, um ein verknüpftes Signal ($z_k$) zu liefern, umfasst, wobei die Empfangsvorrichtung **dadurch gekennzeichnet ist, dass** sie Mittel zur Bildung ($331_k$) eines Fehlersignals ($\varepsilon_k$) zwischen einem Sollwert ($q_k$) des übertragenen Signals und dem verknüpften Signal umfasst und dass der Satz von komplexen Koeffizienten derart angepasst ($330_k$) wird, dass der quadratische Mittelwert des Fehlersignals minimiert wird.

FIG.1

EP 1 187 366 B1

$200_1$

$210_1$

$220_1$

$240_1$

$\hat{\alpha}_1 e^{-j\hat{v}_1}$

$\hat{\theta}_1$

$230_1$

$\hat{\alpha}_1, \hat{v}_1$

$210_P$

$200_L$

$210_1$

$230_P$

$250$

$\hat{\theta}_P$

$\hat{\alpha}_P, \hat{v}_P$

$\hat{\alpha}_P e^{-j\hat{v}_P}$

$210_P$

$220_P$

$240_P$

$\Sigma$

FIG.2

FIG.3

EP 1 187 366 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **SIMON MOSHAVI.** Multi-user detection for DS-CDMA communications. *IEEE Communications Magazine,* Octobre 1996, 124-136
- **M.C. REED et al.** Iterative Multiuser detection using antenna arrays and FEC on multipath channels. *IEEE Journal on Selected Areas in Communications,* Décembre 1999, vol. 17 (12), 2082-2089
- **L.C. GODARA.** Application of antenna arrays to mobile communications, Part II : Beam-forming and direction-of-arrival considerations. *Proceedings of the IEEE,* Août 1997, vol. 85 (8), 1195-1245
- **D. FALCONER et al.** Application of Fast Kalman estimation of adaptive equalization. *IEEE Transactions on Communications,* Octobre 1978, vol. COM-5, 1439-1446